## Europäisches Patentamt

## European Patent Office

## Office européen des brevets

(19)

(11) Veröffentlichungsnummer: **0 011 587**
**B1**

(12) # EUROPÄISCHE PATENTSCHRIFT

(45) Veröffentlichungstag der Patentschrift:
**25.05.83**

(21) Anmeldenummer: **79710008.8**

(22) Anmeldetag: **20.10.79**

(51) Int. Cl.³: **F 16 J 15/34**

(54) **Gleitringdichtung.**

(30) Priorität: **16.11.78 DE 7834082 U**

(43) Veröffentlichungstag der Anmeldung:
**28.05.80 Patentblatt 80/11**

(45) Bekanntmachung des Hinweises auf die Patenterteilung:
**25.05.83 Patentblatt 83/21**

(84) Benannte Vertragsstaaten:
**AT BE CH DE FR GB IT LU NL SE**

(56) Entgegenhaltungen:
**DE-U-7 629 817**
**DE-U-7 834 082**
**FR-A-2 120 375**

(73) Patentinhaber: **Hecker Werke GmbH & Co.KG,
D-7031 Weil, Schönbuch (DE)**

(72) Erfinder: **Sonnenberg, Karl, Bachstrasse 12,
D-7031 Weil/Schönbuch (DE)**

(74) Vertreter: **Hosenthien, Heinz, Dr. Dipl.-Ing. et al,
Patentanwälte Dreiss, Hosenthien & Fuhlendorf
Gerokstrasse 6, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Die Erfindung betrifft eine Gleitringdichtung mit einem mit einer Welle verbindbaren Mitnehmerring, einem in einem Raum des Mitnehmerrings axial verschiebbar angeordneten Druckring und einem mit dem Mitnehmerring über Klauen kuppelbaren Gleitring, der mit seiner freien Stirnseite an einem Gegenring zur Anlage bringbar ist, bei der zwischen dem Mitnehmerring und dem Druckring eine Feder eingespannt ist, die den Druckring in der Betriebsstellung über einen Dichtring gegen den Gleitring und diesen gegen den Gegenring und in der Ruhestellung gegen einen Anschlag des Mitnehmerrings drückt, wobei der Raum des Mitnehmerrings eine dem Gleitring zugekehrte Einführungsöffnung für den Druckring aufweist und der Durchmesser der Einführungsöffnung kleiner ist als der Außendurchmesser des Druckrings.

Bei einer bekannten Ausbildung dieser Art (DE-U-7 629 817) befindet sich im Mitnehmerring eine Hinterdrehung in Form eines Einstiches mit einer Ringschulter, an der der Druckring zur Anlage bringbar ist. Dieser Druckring kann wegen der Klauenöffnungen in den Mitnehmerring eingeführt werden, obwohl sein Außendurchmesser größer ist als der Durchmesser der Einführöffnung. Er wird dazu bei der Montage etwas schräg gelegt und wird dann durch die Feder gegen den Anschlag, also die Ringschulter, gedrückt. Die Stirnseiten des Druckringes und die Anlagefläche der Ringschulter stehen senkrecht zur Achse der Gleitringdichtung. Der Druckring hat zur Welle und zum Innendurchmesser des Einstiches ein bestimmtes Spiel. Bei der bekannten Ausführung hat dies zur Folge, daß der Druckring, bedingt durch die Montage, exzentrisch zur Wellenachse liegen kann, so daß es beim Aufschieben der Gleitringdichtung auf die Welle zu Kratzspuren kommt, die Ausgangspunkt für Undichtigkeiten sein können. Diese Gefahr besteht insbesondere bei größeren Gleitringdichtungen, da hier größere Spiele einerseits und höhere Federdruckkräfte andererseits gegeben sind. Die Einbringung des Einstiches bedeutet darüberhinaus bei der Herstellung einen größeren Aufwand.

Der Erfindung liegt die Aufgabe zugrunde, eine Gleitringdichtung zu schaffen, deren Herstellung vereinfacht ist und die leicht auf die abzudichtende Welle aufgebracht werden kann, ohne daß die Gefahr besteht, daß der Druckring bei der Montage auf der Welle Kratzspuren hinterläßt.

Zur Lösung dieser Aufgabe sieht die Erfindung vor, daß sich der Raum des Mitnehmerringes, in dem der Druckring aufgenommen ist, von der Einführungsöffnung her kegelig nach innen öffnet und die Kegelfläche, deren Achse mit der Mittelachse der Gleitringdichtung zusammenfällt, den Anschlag für den Druckring bildet.

Auf diese Weise wird der in den Mitnehmerring eingeführte Druckring automatisch und selbständig zentriert, so daß sein Innendurchmesser konzentrisch zur Welle liegt und diese mit dem Spiel gleichmäßig umgibt. Die Kegelfläche im Mitnehmerring läßt sich besonders einfach herstellen. Der Druckring kann dabei linienförmig an der Kegelfläche zur Anlage kommen, in diesem Falle ist er an seinem äußeren Umfang zylindrisch oder z. B. ballig ausgeführt. Der Druckring kann aber auch am äußeren Umfang mit einer Kegelfläche versehen sein, deren Steigung der der Kegelfläche des Mitnehmerrings entspricht, so daß eine flächige Anlage gegeben ist, die ein Verkeilen im Sinne der Schrägstellung des Druckringes verhindert. Die Kegelfläche des Mitnehmerringes führt also zum einen zu einer radialen Zentrierung des Druckringes und zum anderen ergibt sich eine axiale Begrenzung der Bewegungsmöglichkeit des Druckringes nach außen zur Einführöffnung des Mitnehmerringes hin. Die Gleitringdichtung läßt sich damit problemlos über Wellenenden, Wellenansätze und Wellenbunde überstreifen.

Der Druckring kann vorzugsweise auf der dem Dichtring zugewandten Seite eine konische Preßfläche aufweisen, die einer entgegengesetzt geneigten konischen Preßfläche im Gleitring gegenüberliegt. Auf diese Weise wird die weitere Zentrierung vom Dichtring übernommen, wenn dieser über den Gleitring gegen die Wirkung der Feder nach innen gedrückt wird und damit der Druckring mit seiner Außenfläche von der Kegelfläche des Mitnehmerringes freikommt.

Sowohl der Mitnehmerring als auch der Gleitring sind mit je zwei Klauen versehen, die in entsprechende Klauenöffnungen einsitzen. Alle Klauen sind in Umfangsrichtung gesehen gleich groß. In besonders vorteilhafter Weise ist vorgesehen, daß die Stirnseiten der Klauen in Ebenen liegen, die paarweise parallel zueinander gerichtet sind und einen Abstand von der Mittelachse des Mitnehmerrings bzw. des Gleitrings aufweisen. Auf diese Weise können die Stirnseiten besonders einfach durch Sägeschnitte, die durch die Mitte gehen, hergestellt werden. Dabei sind die Übergänge zwischen den Stirnseiten und den Innenflächen der Klauen des Mitnehmerringes und die Übergänge zwischen den Stirnseiten der Klauen und den Grundflächen der Aussparungen beim Gleitring mit Rundungen versehen, um besonders bei spröden Gleitringmaterialien während des radialen Mitnahmevorganges die Gefahr der Gleitringbeschädigung durch Kerbwirkung herabzusetzen.

Ein Ausführungsbeispiel der Erfindung ist in der Zeichnung dargestellt und wird im folgenden näher beschrieben. Es zeigt

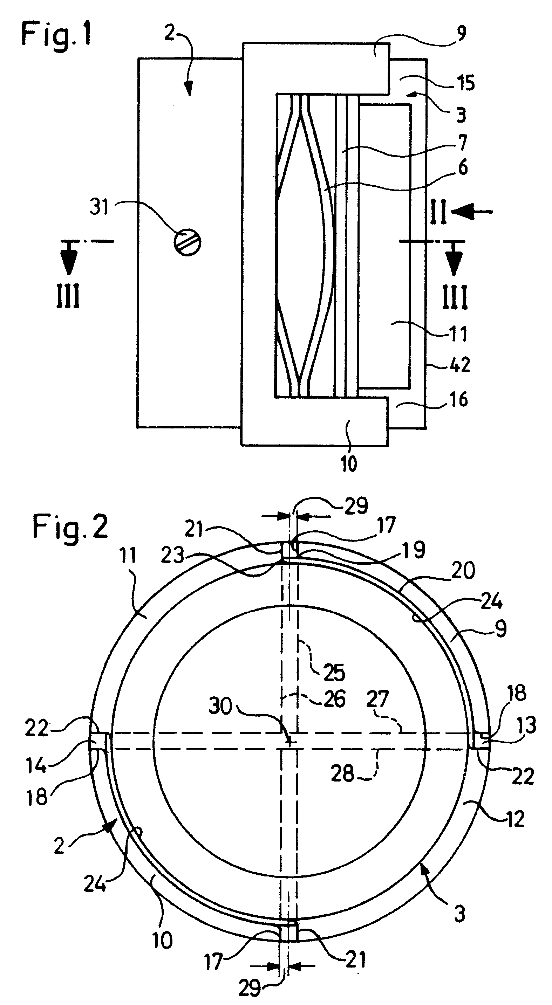

Fig. 1 eine Ansicht einer Gleitringdichtung von der Seite in Ruhestellung,

Fig. 2 eine gegenüber der Mittelachse um 45° gedrehte Draufsicht hierzu in Richtung des Pfeiles II in Fig. 1,

Fig. 3 einen Schnitt durch die Dichtung in Richtung der Pfeile III—III in Fig. 1,

Fig. 4 einen entsprechenden Schnitt wie in Fig. 3, aber in Betriebsstellung nach dem Aufschub auf eine Welle.

Die Gleitringdichtung weist einen fest mit einer Welle 1 verschraubbaren Mitnehmerring 2 auf, in dem ein im wesentlichen axial beweglicher Gleitring 3 geführt ist, der mit seiner einen freien Stirnseite gegen einen stationär in einem nicht näher dargestellten Gehäuse gelagerten Gegenring 4 anlaufen kann. In einem Raum 5 des Mitnehmerringes 2 sind eine Feder 6, vorzugsweise in Form von Wellenfedern, untergebracht, die einen Druckring 7 unter Zwischenlage eines Dichtringes 8 gegen den Gleitring 3 preßt.

Der Mitnehmerring 2 und der Gleitring 3 sind jeweils mit zwei einander gegenüberliegenden Klauen 9, 10, 11, 12 versehen, die in entsprechende Klauenöffnungen 13 bis 16 ineinander einsitzen. Die Stirnseiten 17, 18 der Klauen 9, 10 des Mitnehmerringes 2 gehen mit Rundungen 19 in die Innenfläche 20 der Klauen 9, 10 über, ebenso die Stirnseiten 21, 22 mit Rundungen 23 in die Grundflächen 24 der Klauenöffnungen 15, 16. Die Stirnseiten 17, 18 der Klauen 9, 10 bzw. 21, 22 der Klauen 11, 12 liegen in Ebenen 25 bis 28, die einen Abstand 29 von der Mittelachse 30 haben, so daß jeweils zwei benachbarte Stirnseiten 17, 21 bzw. 18, 22 der Klauen 9 bis 12 durch einen Sägeschnitt hergestellt werden können.

Der Mitnehmerring 2 ist auf der Welle 1 durch eine Schraube 31 gesichert. Von einer Einführungsöffnung 32 des Mitnehmerrings 2 geht eine den Raum 5 mitbildende Kegelfläche 33 aus, deren Achse mit der Mittelachse 30 zusammenfällt. Der Raum 5 öffnet sich mit der Entfernung von der Einführungsöffnung 32 immer mehr. In einer Aussparung 34 stützt sich die Feder 6 ab, sie ist dort zentriert. Der Druckring 7, an dessen einer Stirnseite 35 sich die Feder 6 andererseits abstützt, hat eine Außenfläche, die beim gezeigten Ausführungsbeispiel ebenfalls als Kegelfläche 36 ausgebildet ist, deren Steigung der der Kegelfläche 33 entspricht. Die gegenüberliegende Stirnseite ist als konische Preßfläche 37 ausgebildet, die einer konischen Preßfläche 38 des Gleitringes 3 mit entgegengesetzter Richtung gegenüberliegt. Zwischen den beiden Preßflächen 37, 38 befindet sich der Dichtring 8.

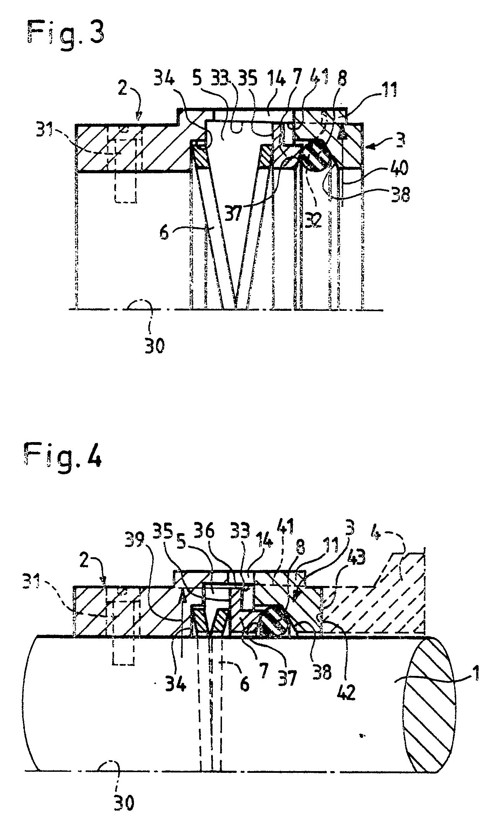

Der größte Außendurchmesser 39 des Druckringes 7 ist größer als der Durchmesser 40 der Einführungsöffnung 32. Wegen der Klauenöffnungen 13, 14 im Mitnehmerring 2 ist es möglich, trotz dieser Durchmesserverhältnisse den Druckring 7 durch Schräglage in den Raum 5 (Schnappmontage) einzuführen. Die Feder 6 drückt ihn dann in der in Fig. 3 wiedergegebenen Ruhestellung mit seiner Außenfläche gegen die Kegelfläche 33, so daß er senkrecht gestellt und damit radial zentriert wird und gleichzeitig einen Anschlag 41 findet, der das Austreten aus dem Mitnehmerring 2 verhindert.

In der Fig. 4 ist die Betriebsstellung gezeigt, in der die freie Stirnseite 42 des Gleitringes 3 an der Stirnseite 43 des Gegenringes 4 anliegt. Dabei ist der Gleitring 3 gegen die Wirkung der Feder 6 in den Mitnehmerring 2 hineingeschoben, so daß die Feder 6 maximal gespannt ist.

Der Mitnehmerring 2, der Gleitring 3, die Feder 6, der Druckring 7 und der Dichtring 8 rotieren mit der Welle 1, der Gegenring 4 steht. Der Dichtring 8 ist in der Regel als O-Ring ausgebildet. Beim Eindrücken des Gleitringes 3 in den Mitnehmerring 2 wird der Druckring 7 von der Kegelfläche 33 abgehoben, die weitere Zentrierung wird jetzt von der konischen Preßfläche 37 übernommen.

## Patentansprüche

1. Gleitringdichtung mit einem mit einer Welle (1) verbindbaren Mitnehmerring (2), einem in einem Raum (5) des Mitnehmerrings (2) axial verschiebbar angeordneten Druckring (7) und einem mit dem Mitnehmerring über Klauen (9—12) kuppelbaren Gleitring (3), der mit seiner freien Stirnseite (42) an einem Gegenring (4) zur Anlage bringbar ist, bei der zwischen dem Mitnehmerring (2) und dem Druckring (7) eine Feder (6) eingespannt ist, die den Druckring (7) in der Betriebsstellung über einen Dichtring (8) gegen den Gleitring (3) und diesen gegen den Gegenring (4) und in der Ruhestellung gegen einen Anschlag (41) des Mitnehmerrings (2) drückt, wobei der Raum (5) des Mitnehmerrings (2) eine dem Gleitring (3) zugekehrte Einführungsöffnung (32) für den Druckring (7) aufweist und der Durchmesser (40) der Einführungsöffnung (32) kleiner ist als der Außendurchmesser (39) des Druckrings (7), dadurch gekennzeichnet, daß sich der Raum (5) des Mitnehmerrings (2), in dem der Druckring (7) aufgenommen ist, von der Einführungsöffnung (32) her kegelig nach innen öffnet und die Kegelfläche (33), deren Achse mit der Mittelachse (30) der Gleitringdichtung zusammenfällt, den Anschlag (41) für den Druckring (7) bildet.

2. Gleitringdichtung nach Anspruch 1, dadurch gekennzeichnet, daß der Druckring (7) linienförmig an der Kegelfläche (33) zur Anlage kommt.

3. Gleitringdichtung nach Anspruch 1, dadurch gekennzeichnet, daß der Druckring (7) am äußeren Umfang mit einer Kegelfläche (36) versehen ist, deren Steigung der der Kegelfläche (33) des Mitnehmerringes (2) entspricht.

4. Gleitringdichtung nach einem der Ansprüche 1—3, dadurch gekennzeichnet, daß der Druckring (7) auf der dem Dichtring (8) zugewandten Seite eine konische Preßfläche (37) aufweist, die einer entgegengesetzt geneigten konischen Preßfläche (38) im Gleitring (3) gegenüberliegt.

5. Gleitringdichtung nach Anspruch 1, deren Mitnehmerring (2) und Gleitring (3) jeweils zwei einander gegenüberliegende Klauen (9—12) aufweisen, deren Umfangserstreckung gleich groß ist, dadurch gekennzeichnet, daß die Stirnseiten (17, 18, 21, 22) der Klauen (9—12) in Ebenen (25—28) liegen, die paarweise parallel zueinander gerichtet sind und einen Abstand (29) von der Mittelachse (30) des Mitnehmerringes (2) bzw. des Gleitringes (3) aufweisen.

6. Gleitringdichtung nach Anspruch 5, dadurch gekennzeichnet, daß die Übergänge zwischen den Stirnseiten (17, 18) und den Innenflächen (20) der Klauen (9, 10) des Mitnehmerringes (2) mit einer Rundung (19) versehen sind.

7. Gleitringdichtung nach Anspruch 5, dadurch gekennzeichnet, daß die Übergänge zwischen den Stirnseiten (21, 22) der Klauen (11, 12) und den Grundflächen (24) der Klauenöffnungen (15, 16) beim Gleitring (3) mit einer Rundung (23) versehen sind.

**Claims**

1. Mechanical slide ring packing seal with a drive ring (2) connectable to a shaft (1), a thrust ring (7) axially movable within the drive ring (2) and further with a rotary ring (3) coupled to the drive ring (2) by claws (9 to 12), which sealing ring (3) is with its free face (42) abutting a stationary ring (4), and with which a spring (6) is held under tension between the driving ring (2) and the thrust ring (7) and operating position, presses the thrust ring (7) through a sealing ring (8) against the rotary ring (3) and thereby the rotary ring against the stationary ring (4), and, in inoperative position, against an abutment (41) of the drive ring (2), wherein further the space (5) of the drive ring (2) has an opening (32) directed towards the rotary ring (3), and for inserting the thrust ring (7) the diameter (40) of this opening (32) being smaller than the outer diameter of the thrust ring (7), characterized in that the space (5) of the drive ring (2), whithin which the thrust ring (7) is received, is conically broadening from the said opening (32) into the interior and in that the conical surface (33), the axis of which lies within the central axis (30) of the seal, is the abutment (41) for the thrust ring (7).

2. Mechanical slide ring packing seal in accordance to claim 1, characterized in that the thrust ring (7) abuts the conical surface (33) along a line.

3. Mechanical slide ring packing seal in accordance to claim 1, characterized in that the thrust ring (7) is provided along its outer periphery with a conical surface (36), the slope of which corresponds to the conical surface (33) of the drive ring (2).

4. Mechanical slide ring packing seal in accordance to one of claims 1 to 3, characterized in that the thrust ring (7) is provided with a conical press surface (37) on the side, which faces the sealing ring (8), and that this press surface (37) faces an oppositely inclined conical press surface (38) within the rotating ring (3).

5. Mechanical slide ring packing seal in accordance to claim 1, in which the drive ring (2) and rotating ring (3) are each provided with two claws (9 to 12) facing each other and of equal peripheral extension, characterized in that the faces (17, 18, 21, 22) of the claws (9 to 12) lie in planes (25 to 28), which pairwise are aligned parallel to each other and at a distance (29) from the middle axis (30) of the driving ring (2) and of the rotating ring (3) respectively.

6. Mechanical slide ring packing seal in accordance to claim 5, characterized in that the transitions between the faces (17, 18) and the interior surfaces (20) of the claws (9, 10) of the drive ring (2) are rounded (19).

7. Mechanical slide ring packing seal in accordance to claim 5, characterized in that the transitions between the faces (21, 22) of the claws (11, 12) and the base planes (24) of the claw openings (15, 16) of the rotating ring (3) are rounded (23).

**Revendications**

1. Joint à bague glissante avec une bague d'entraînement pouvant être reliée à un arbre (1), une bague de pression (7) disposée de façon à être axialement coulissante dans un espace (5) de la bague d'entraînement (2), et une bague glissante (3) pouvant être couplée à la bague d'entraînement par des griffes (9—12) et qui par son côté frontal libre (42) peut être amenée en contact avec une contre-bague (4), avec entre la bague d'entraînement (2) et la bague de pression (7), un ressort (6) qui est tendu, qui presse la bague de pression (7), en position de fonctionnement, par une bague d'étanchéité (8) contre la bague glissante (3) et celle-ci contre la contre-bague (4), et à la position de repos, contre une butée (41) de la bague d'entraînement (2), ce par quoi l'espace (5) de la bague d'entraînement (2) présente une ouverture d'introduction (32) tournée vers la bague glissante (3) pour la bague de pression (7) et le diamètre (40) de l'ouverture d'introduction (32) est plus petit que le diamètre extérieur (39) de la bague de pression (7), caractérisé en ce que l'espace (5) de la bague d'entraînement (2), où est reçue la bague de pression (7), s'ouvre, vers l'intérieur, à partir de l'ouverture d'introduction (32) de façon conique et la surface conique (33), dont l'axe correspond à l'axe médian (30) de l'étanchéité à bague glissante, forme la butée (41) pour la bague de pression (7).

2. Joint à bague glissante selon la revendication 1 caractérisé en ce que la bague de pression (7) vient, de façon linéaire, en contact avec la surface conique (33).

3. Joint à bague glissante selon la revendication 1 caractérisé en ce que la bague de pression (7) est pourvue, sur son pourtour externe, d'une surface conique (36), dont la conicité correspond à celle de la surface conique (33) de la bague d'entraînement (2).

4. Joint à bague glissante selon l'une quelconque des revendications 1 à 3 caractérisé en ce que la bague de pression (7), sur son côté tourné vers la bague d'étanchéité (8), présente une surface conique de pression (37), qui se trouve en face d'une surface de pression (38) conique inclinée de façon opposée, de la bague glissante (3).

5. Joint à bague glissante selon la revendication 1 où la bague d'entraînement (2) et la bague glissante (3) présentent chacune deux griffes se trouvant vis à vis (9—12), dont l'étendue périphérique est de même grandeur, caractérisé en ce que les côtés frontaux (17, 18, 21, 22) des griffes (9—12) se trouvent dans des plans (25—28) qui sont dirigés parallèlement et par paires et présentent une certaine distance (29) de l'axe médian (30) de la bague d'entraînement (2) ou de la bague glissante (3).

6. Joint à bague glissante selon la revendication 5 caractérisé en ce que les transitions entre les côtés frontaux (17, 18) et les surfaces internes (20) des griffes (9, 10) de la bague d'entraînement (2) sont pourvues d'un arrondi.

7. Joint à bague glissante selon la revendication 5 caractérisé en ce que les transitions entre les côtés frontaux (21, 22) des griffes (11, 12) et les surfaces de base (24) des ouvertures (15, 16) pour les griffes, sur la bague glissante (3) sont pourvues d'un arrondi (23).

# Fig.1

# Fig.2

Fig. 3

Fig. 4